# FASCICULE DE BREVET EUROPEEN

(11) **EP 0 644 365 B1**
(45) Date de publication et mention de la délivrance du brevet: **29.01.1997**
(21) Numéro de dépôt: 94420251.4
(22) Date de dépôt: 20.09.1994
(51) Int. Cl.: F16L 21/03, E03B 9/10

(54) **Joint d'étanchéité polyvalent pour regard**
Mehrzweckdichtung für Kontrollschacht
Multipurpose seal for manhole

(30) Priorité: 21.09.1993 FR 9311473
(43) Date de publication de la demande: 22.03.1995
(73) Titulaire: SOCIETE ANONYME DITE : SODIF, F-69700 Givors (Rhône) (FR)
(72) Inventeur: Tremouilhac, Robert, F-38200 Villette De Vienne (FR)
(74) Mandataire: Perrier, Jean-Pierre

(56) Documents cités:
- EP-A- 0 140 171
- FR-A- 1 348 390
- FR-A- 2 673 263
- GB-A- 398 300
- US-A- 3 325 174

## Description

La présente invention concerne un joint d'étanchéité polyvalent pour regard et, plus particulièrement, quoique non exclusivement, pour regard de chaussée.

Un regard est destiné à protéger un accès à une canalisation enterrée, telle qu'un égout, ou à un organe de contrôle d'une canalisation enterrée, telle qu'une vanne.

Un tel regard est un dispositif, généralement en fonte, comprenant un corps tubulaire dont l'extrémité supérieure est constituée par un cadre annulaire formant siège pour un couvercle ou tampon amovible de fermeture et dont l'extrémité inférieure est constituée par une virole destinée à être engagée dans l'extrémité supérieure d'un tube vertical donnant accès à la canalisation enterrée ou à l'un de ses organes de contrôle, un joint annulaire, en élastomère et dont l'alésage présente un diamètre sensiblement égal au diamètre extérieur de la virole du corps du regard, étant inséré entre cette dernière et l'extrémité supérieure du tube de liaison.

Ce joint a pour but d'assurer l'étanchéité aux odeurs, à l'eau et à tout autre fluide, et aussi d'éviter au produit de scellement de pénétrer à l'intérieur du tube.

Si le diamètre extérieur des viroles des corps de regards est constant, aux tolérances de fabrication près, ceux des alésages des tubes de liaison varient, notamment s'ils sont en PVC ou en fibre-ciment ou béton. En effet, les premiers ont un diamètre d'alésage très inférieur à celui des seconds et cette différence est trop grande pour qu'un même joint d'étanchéité puisse être utilisé dans les deux cas. Il faut donc utiliser des joints de deux types différents.

Cela implique, d'une part, de fournir ces deux joints avec chaque regard, puisque lors de la réfection d'un réseau, on ne connaît pas par avance la nature des tubes raccordés aux regards déjà posés, et, d'autre part, d'augmenter le prix du regard de la valeur d'un joint qui n'est pas utilisé.

On connaît par GB-A-398 300 un joint polyvalent pour assurer l'étanchéité dans la jonction entre une canalisation externe et une canalisation interne pouvant présenter deux diamètres différents, ce joint comprenant trois parties, une partie extrême portant une collerette, une autre partie extrême inférieure et, entre ces deux parties, une partie intermédiaire de faible épaisseur pour permettre de retrousser la partie extrême sans collerette à l'intérieur de la partie extrême avec collerette pour assurer l'étanchéité avec un tube de petit diamètre. Un tel joint, s'adaptant à deux diamètres différents du tube intérieur, est inadapté pour assurer l'étanchéité entre la virole du tampon d'un regard et un tube vertical de liaison, car l'introduction de la virole dans le tube doté du joint annulerait le retroussage de ce joint et ramènerait la partie retroussée dans le prolongement de l'autre partie.

La présente invention vise à pallier cet inconvénient.

A cet effet, dans le joint annulaire selon l'invention, la partie inférieure du joint se retrousse sur l'extérieur de la partie supérieure dont la collerette présente une gorge annulaire ayant une largeur, au moins égale à l'épaisseur de l'extrémité inférieure de la partie inférieure de la jupe cylindrique, pour assurer la retenue de cette partie inférieure à l'état retroussé.

La gorge présente l'avantage d'assurer le verrouillage de l'extrémité inférieure libre de la jupe du joint en position retroussée.

Suivant une forme d'exécution préférée de ce joint d'étanchéité, au moins la partie supérieure de sa jupe présente une lèvre intérieure destinée à compenser les petites variations éventuelles des alésages des tubes de liaison, variations dues aux tolérances de fabrication.

De préférence, pour faciliter le montage de ce joint d'étanchéité dans les tubes de liaison de grand diamètre, l'alésage de l'extrémité supérieure de sa partie inférieure est légèrement évasée pour former une portée conique d'introduction dans le tube de liaison, lorsque ce tube est de grand diamètre et que cette partie inférieure est retroussée sur la partie supérieure de la jupe du joint.

De toute façon, l'invention sera bien comprise, à l'aide de la description qui suit, en référence au dessin schématique annexé représentant, à titre d'exemple non limitatif, une forme d'exécution de ce joint d'étanchéité pour regard :
Figure 1 en est une vue de côté avec demi-coupe axiale;
Figure 2 est une vue en coupe axiale de l'extrémité supérieure de tuyaux de liaison, de petit diamètre, c'est-à-dire en PVC, équipée d'un regard d'un type classique avec interposition du joint d'étanchéité de figure 1;
Figure 3 est, à échelle agrandie, une vue partielle de l'objet de figure 2 montrant, plus en détail, la disposition du joint d'étanchéité entre l'extrémité supérieure du tube de liaison et la virole du corps du regard;
Figure 4 est une vue similaire et symétrique à figure 3 montrant le mode d'utilisation du joint de figure 1 dans le cas où le regard est adapté à l'extrémité supérieure d'un tube de liaison de grand diamètre, c'est-à-dire en fibre-ciment ou béton.

Comme indiqué précédemment, un regard est destiné à protéger un accès à une canalisation enterrée, telle qu'un égout, ou à un organe de contrôle d'une canalisation enterrée, telle qu'une vanne. Un regard est donc un dispositif, généralement en fonte, comprenant un corps tubulaire 2, dont l'extrémité supérieure est constituée par un cadre annulaire 3 formant le siège 3a d'un tampon ou couvercle amovible 4 de fermeture, l'extrémité inférieure de ce corps 2 étant constitué par une virole cylindrique 5 destinée à être engagée dans l'extrémité supérieure d'un tube vertical assurant la liaison entre le regard 2 et la canalisation enterrée ou son organe de contrôle, non représenté sur le dessin.

Comme précédemment indiqué, il existe deux grands types différents de tubes de liaison, à savoir des tubes 6 en PVC, dont l'alésage est de petit diamètre, et des tubes 7 en fibre-ciment ou béton, dont l'alésage est d'un diamètre supérieur à celui des tubes 6 en PVC.

Pour s'opposer au passage de tout fluide, dans un sens ou dans l'autre, entre le regard 2 et l'extrémité supérieure du tube vertical 6 ou 7, notamment au passage des odeurs si le regard 2 est destiné à donner accès à une canalisation d'égout, ou encore de l'eau de ruissellement, il est prévu de monter, entre la virole cylindrique 5 du regard 2 et l'extrémité supérieure du tube de liaison 6 ou 7, un joint d'étanchéité.

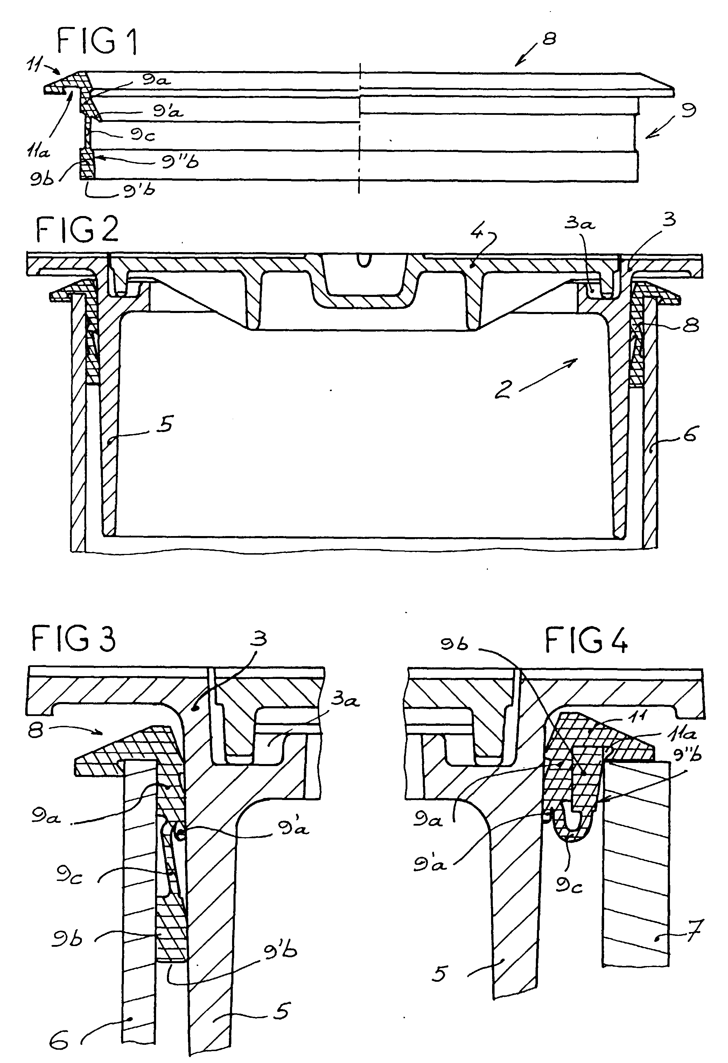

La présente invention concerne justement un joint d'étanchéité 8 destiné à cette fonction et qui est illustré, en particulier, sur les figures 1, 3 et 4.

Ce joint d'étanchéité 8, de forme annulaire en élastomère et d'un diamètre intérieur sensiblement égal au diamètre extérieur de la virole 5 du regard 2, comprend une jupe cylindrique 9 destinée à être engagée entre la virole 5 du corps 2 du regard et l'alésage du tube de liaison 6 ou 7 ou d'une rallonge télescopique, dont ce tube de liaison peut, éventuellement, être équipé.

Cette jupe cylindrique 9 est surmontée d'une collerette extérieure 11 destinée à prendre appui contre l'extrémité supérieure du tube de liaison 6 ou 7 ou de sa rallonge télescopique.

La jupe cylindrique 9 de ce joint 8 est elle-même composée de trois parties, à savoir :
- une partie supérieure 9a dont l'épaisseur, en service, c'est-à-dire à l'état comprimé, radialement, entre la virole 5 du regard 2 et l'alésage d'un tube de liaison 6 en PVC, c'est-à-dire d'un tube de liaison dont l'alésage présente un petit diamètre, correspond sensiblement à la différence des rayons de la virole 5 du coprs 2 du regard et de l'alésage du tube de liaison 6 de petit diamtère,
- une partie inférieure 9b disposée à l'extrémité libre de la jupe 9 et dont l'épaisseur, ajoutée à celle de la partie supérieure 9a, à l'état comprimé, correspond sensiblement à la différence des rayons de la virole 5 du corps 2 du regard et de l'alésage d'un tube de liaison 7 de grand diamètre, c'est-à-dire en fibre-ciment ou béton,
- et une partie intermédiaire 9c située entre ces deux premières parties, de très faible épaisseur et permettant de retrousser la partie inférieure 9b sur la partie supérieure 9a, comme illustré sur la figure 4.

Ainsi, grâce à sa composition, le joint d'étanchéité 8 peut être adapté entre un regard 2 et l'extrémité libre d'un tube de liaison, que ce soit un tube 6 en PVC, c'est-à-dire de petit diamètre, ou un tube 7 en fibre-ciment ou béton, c'est-à-dire de grand diamètre. Les figures 3 et 4 illustrent clairement de quelle manière ce joint 8 doit être utilisé selon qu'il est adapté à l'extrémité supérieure d'un tube 6 ou d'un tube 7.

Par conséquent, lorsqu'une entreprise est chargée de procéder à la réhausse de regards 2, notamment lorsque ces regards sont disposés sur une chaussée en cours de réfection, il lui suffit de posséder un nombre de joints 8 égal au nombre des regards 2 à rehausser, puisque le même joint peut être utilisé quelle que soit la nature des tubes verticaux de liaison 6 et 7.

En résumé, l'extrémité inférieure 9b de la jupe 9 du joint d'étanchéité 8 a pour raison d'être la compensation des différences des diamètres d'alésage des tubes 6 et 7.

Comme le montre plus particulièrement la figure 4, l'alésage de l'extrémité supérieure de la partie inférieure 9b de la jupe 9 du joint 8 est évasé en direction de la partie intermédiaire 9c, pour constituer une portée conique 9''b très visible sur la figure 4 et destinée à faciliter l'engagement du joint 8, à l'état retroussé de son extrémité inférieure 9b, dans l'extrémité supérieure d'un tube vertical 7 de grand diamètre, c'est-à-dire en fibre-ciment ou béton.

Par ailleurs, pour faciliter la tenue de ce joint 8 en position retroussée de la partie inférieure 9b de sa jupe 9, la face inférieure de sa collerette 11 présente une gorge 11a de même largeur que l'extrémité libre 9'b de la partie inférieure 9b de la jupe 9, destinée à recevoir cette extrémité 9'b lorsque la partie inférieure 9b est en position retroussée, comme illustré sur la figure 4.

Comme cela est parfaitement visible sur cette figure, la gorge 11a joue, à l'égard de la partie inférieure 9b de la jupe 9 du joint 8, le rôle de gâche de retenue en position retroussée.

Suivant une autre caractéristique intéressante de l'invention, la partie supérieure 9a de la jupe 9 du joint d'étanchéité 8 présente une lèvre intérieure 9'a destinée à compenser les petites variations éventuelles de diamètre des viroles 5 de regard 2 ainsi que des alésages de tubes 6 ou 7, variations qui peuvent être dues seulement aux tolérances de fabrication.

## Revendications

1. Joint d'étanchéité polyvalent pour regard d'accès à une canalisation enterrée, à travers un tube vertical de liaison (6, 7), le regard (2) comprenant un corps tubulaire, généralement en fonte, dont l'extrémité supérieure constitue un cadre annulaire (3) formant le siège (3a) pour un couvercle ou tampon amovible de fermeture (4) et dont l'extrémité inférieure est constituée par une virole (5) destinée à être engagée dans l'extrémité supérieure d'un tube de liaison vertical (6, 7), de petit ou de grand diamètre, avec interposition d'un joint d'étanchéité, ce joint (8), de type annulaire et en élastomère, comprenant une jupe cylindrique (9) surmontée d'une collerette extérieure (11), cette jupe cylindrique (9) étant elle-même composée de trois parties, une partie supérieure (9a) portant la collerette, une partie inférieure (9b) et, entre ces deux parties (9a, 9b), une partie intermédiaire (9c), de très faible épaisseur, pour permettre de retrousser la partie inférieure (9b) sur la partie supérieure, **caractérisé en ce que** la partie inférieure (9b) du joint se retrousse sur l'extérieur de la partie supérieure (9a) dont la collerette (11) présente une gorge annulaire (11a) ayant une largeur au moins égale à l'épaisseur de l'extrémité inférieure (9'b) de la partie inférieure (9b) de la jupe cylindrique (9), pour assurer la retenue de cette partie inférieure à l'état retroussé.

2. Joint d'étanchéité selon la revendication 1, **caractérisé en ce qu**'au moins la partie supérieure (9a) de sa jupe cylindrique (9) présente une lèvre souple intérieure (9'a).

3. Joint d'étanchéité selon la revendication 1 ou 2, **caractérisé en ce que** l'extrémité supérieure de l'alésage de la partie inférieure (9b) de sa jupe (9) est évasée pour former une portée conique (9"b) d'introduction dans le tube de liaison lorsque ce tube de liaison (7) est de grand diamètre et que cette partie inférieure (9b) est retroussée sur la partie supérieure (9a) de cette jupe (9).

## Patentansprüche

1. Mehrzweckdichtverbindung für einen Zugangsschacht zu einer unterirdischen Rohrleitung durch ein vertikales Verbindungsrohr (6, 7), wobei der Schacht (2) einen im allgemeinen aus Guß-Material gefertigten, rohrförmigen Körper umfaßt, dessen oberes Ende einen ringförmigen Rahmen (3) bildet, der eine Aufnahme (3a) für eine abnehmbare Abdeckung oder einen abnehmbaren Schließ-Stopfen (4) bildet und dessen unteres Ende durch einen Ring (5) gebildet ist, der dazu bestimmt ist, in das obere Ende eines vertikalen Verbindungsrohrs (6, 7) mit kleinem oder großem Durchmesser eingesetzt zu werden, und zwar mit Einfügen einer Dichtverbindung, wobei diese Verbindung (8), welche von ringförmiger Art und aus Elastomer ist, eine zylindrische Schürze (9) umfaßt, die von einem äußeren Kragen (11) überragt ist, wobei diese zylindrische Schürze (9) selbst aus drei Abschnitten zusammengesetzt ist, und zwar einem den Kragen tragenden oberen Abschnitt (9a), einem unteren Abschnitt (9b) und einem Zwischenabschnitt (9c) zwischen den zwei Abschnitten (9a, 9b) mit sehr geringer Dicke um zu erlauben, den unteren Abschnitt (9b) an den oberen Abschnitt zu stülpen,
dadurch gekennzeichnet,
daß sich der untere Abschnitt (9b) der Verbindung an das Äußere des oberen Abschnitts (9a) stülpt, dessen Kragen (11) eine ringförmige Vertiefung (11a) aufweist, deren Breite zumindest gleich der Dicke des unteren Endes (9'b) des unteren Abschnitts (9b) der zylindrischen Schürze (9) ist, um das Halten dieses unteren Abschnitts im gestülpten Zustand sicherzustellen.

2. Dichtverbindung nach Anspruch 1,
dadurch gekennzeichnet,
daß zumindest der obere Abschnitt (9a) ihrer zylindrischen Schürze (9) eine innere elastische Lippe (9'a) aufweist.

3. Dichtverbindung nach Anspruch 1 oder 2,
dadurch gekennzeichnet,
daß das obere Ende der Öffnung des unteren Abschnitts (9b) ihrer Schürze (9) erweitert ist, um einen konischen Bereich (9"b) zum Einführen in das Verbindungsrohr zu bilden, wenn dieses Verbindungsrohr (7) einen großen Durchmesser aufweist und der untere Abschnitt (9b) an den oberen Abschnitt (9a) der Schürze (9) gestülpt ist.

## Claims

1. A multi-purpose seal for an access manhole to an underground passage through a vertical connection tube (6, 7), the manhole (2) comprising a tubular body, generally of cast iron, of which the upper end constitutes an annular frame (3) forming the seat (3a) for a removable closure cover or plug (4) and of which the lower end is constituted by a barrel (5) intended to be engaged in the upper end of a vertical connecting tube (6, 7) of small or large diameter, with the interposition of a sealing joint, this joint (8), being annular and of elastomeric material, including a cylindrical skirt (9) surmounted by an external collar (11), this cylindrical skirt (9) being itself composed of three parts, an upper part (9a) carrying the collar, a lower part (9b) and, between these two parts (9a, 9b) an intermediate part (9c) of very small thickness to permit the lower part (9b) to be turned up on the upper part, characterised in that the lower part (9b) of the joint turns up on the exterior of the upper part (9a) of which the collar (11) provides an annular groove (11a) having a width at least equal to the thickness of the lower end (9'b) of the lower part (9b) of the cylindrical skirt (9), to effect the retention of this lower part in the turned up state.

2. A sealing joint according to Claim 1, characterised in that at least the upper part (9a) of its cylindrical skirt (9) provides a flexible internal lip (9'a).

3. A sealing joint according to Claim 1 or 2, characterised in that the upper end of the bore of the lower part (9b) of its skirt (9) is flared to form a conical bearing surface (9"b) for introduction into the connecting tube when this connecting tube (7) is of large diameter and when this lower part (9b) is turned up on the upper part (9a) of this skirt (9).
